# EUROPEAN PATENT SPECIFICATION

(11) **EP 1 269 779 B1**
(45) Date of publication and mention of the grant of the patent: **11.07.2007**
(21) Application number: 01921400.6
(22) Date of filing: 20.03.2001
(51) Int. Cl.: H04Q 7/32, H04L 9/32

(54) **HANDLING OF A MESSAGE**
HANDHABUNG EINER NACHRICHT
TRAITEMENT D'UN MESSAGE

(30) Priority: 24.03.2000 FI 20000695
(43) Date of publication of application: 02.01.2003
(73) Proprietor: SmartTrust Systems Oy, 00510 Helsinki (FI)
(72) Inventor: MÄTTÖ, Mikko, FIN-02150 Espoo (FI); LIUKKONEN, Jukka, FIN-00630 Helsinki (FI); PIETILÄINEN, Henna, FIN-02150 Espoo (FI); LEHTONEN, Veera, FIN-00150 Helsinki (FI)
(74) Representative: Simmelvuo, Markku Kalevi
(86) International application number: PCT/FI2001/000279
(87) International publication number: WO 2001/078432

(56) References cited:
- WO-A-98/28877
- WO-A1-00/59244
- WARWICK FORD: 'Computer communications security', 1994, PRENTICE HALL P T R, ENGLEWOOD CLIFFS, NEW JERSEY XP002957019 ISBN 0-13-799453-2 * page 127 - page 130 *

## Description

The invention relates to telecommunication systems. In particular, the invention relates to a method and a system in which an identification number is attached to a message to be sent either from a mobile station or a network server, after which the message is transferred to the network server or mobile station, whose list of identification numbers and message identification number helps one to judge whether the message can be accepted.

### PRIOR ART

The signing of short messages digitally is becoming common. The digital signature is an electronic signature which enables one to identify the sender of the message with certainty. The digital signature may also be used to make sure of the fact of whether the sent message has changed during the data transfer and to automatically stamp the time in the message. Usually a digitally signed message is not encrypted, so if the message includes sensitive information, then the message shall be encrypted using, e.g. a public key method (RSA, Rivest-Shamir-Adleman).

The short message service enables one to send short messages that contain typically up to 160 characters. The transmission of messages does not require that the mobile station is switched on. If the mobile station cannot be reached, the message is saved to the short message service center. The short message service center saves the message for several days, and if the mobile station receiving the message is activated in the area of the mobile network, then the message is sent to the mobile station. Messages are being transmitted either in the area of the same cell or to other cells by means of the roaming feature of the mobile station. When short messages are being transferred from the sender to the recipient, the short messages are transmitted through several components of the telecommunication network, which may cause delays in the proceeding of the short message, disappearances and changing in the mutual order. Short messages may also be transmitted to other devices, such as digital telephones or e-mail messages.

The exchange of messages to be transmitted in telecommunication systems may happen in four different ways: a notification of the server, a notification of the mobile station, a PUSH or PULL service. In the notification of the server the server sends to the mobile station a message to which no response is expected. Correspondingly, in the notification of the mobile station the mobile station sends to the server a message to which no response is expected. Instead, in the PUSH service, the server sends to the mobile station a message to which the server expects a response. The PUSH service may still continue with a message sent by the server. In the PULL service the mobile station sends a message to which the mobile expects a response. In the PUSH service as well as in the PUSH service the PULL service may be continued by sending a new message.

When sending messages in a mobile communication system one has to note that the message channel to be used has got a very low band width and rate. In addition, both the sender and the recipient of the message do not have a common reliable clock.

One specific problem is the identification of the message as well as the noticing of duplicates or messages sent or received too late. Usually digitally signed messages are used for single transactions such as paying the bills. In that case, there is a risk that some extraneous entity saves the message and resends it at a later point wishing to gain economical profit. The aforementioned method is called a repetition attack. On the other hand it is possible that messages are doubled during the data transmission, although the data transmission system would work quite correctly. When messages are doubled for the time it takes to transmit the data, it is more obvious that the message arrives at the destination. Error correction of a message may also be performed based on the sending of several messages.

Previously known is a solution which solves the aforementioned problem. Prior to the digital signing, a time stamp is attached to the message that is used to identify the transmission moment of the message. When the time stamp of the message is compared to the clock of the recipient, the recipient of the message notices whether the message is a duplicate and first of all too late received. Duplicates and messages arrived too late are rejected. The method is rather cumbersome in a mobile station, since the method requires an accurate synchronization of clocks of both of the sender and the recipient. Time stamps are also not reliable, if there are duplicates generating very fast. Messages generated very fast may receive the same time stamp, in which case no one knows what is the correct transmission order of the messages.

Prior art includes a publication by Warwick Ford entitled "Computer Communications Security", dated 1994, XP002957019 ISBN 0-13-799453-2, on page 129 of which a known use of time-stamps is disclosed.

The objective of the present invention is to eliminate or at least to alleviate the drawbacks referred to above. One further objective of the invention is to enable a remarkably simple method for the identification of messages both in a mobile station which has got a restricted amount of memory and calculation capacity and in a server which is located in the telecommunication network.

### BRIEF DESCRIPTION OF THE INVENTION

The invention enables one to notice duplicates or digitally signed messages arrived too late, which are rejected because the information included in them may be incorrect.

The invention relates to a method in which the message is first saved. Prior to the sending of the message, the identification number, the identifier of the message is increased in a first authentication unit, and an identification number is attached to the message by means of which the message is individualized. The message and the identification number of the message are signed digitally and transferred to a second authentication unit via the telecommunication network. In the second authentication unit, the identification number of the message is compared to the uppermost identification number in the list of identification numbers. If the identification number of the message exceeds the uppermost identification number in the list of identification numbers, then the list of identification numbers is updated and the message is accepted. If the identification number of the message goes below the undermost identification number in the list of identification numbers, then one knows that the message has been received too late, in which case the message is rejected. If the identification number of the message falls between the undermost and uppermost identification number in the list of identification numbers, then it is checked whether the message has already been received by consulting the list of identification numbers. The list of identification numbers includes identification numbers of messages already received. If, based on the list of identification numbers, the message has not been received yet, then the list of identification numbers is updated and the message is received. Otherwise the message is rejected.

For the identification of messages, a first authentication unit is needed either in the mobile station or in the network server that generates the identification number and attaches it to the message at the point of transmission. If the identification number of the message grows too big, then the first authentication unit notices this and stops proceeding, e.g. in such a way that the first authentication unit does no longer increase the identification number to be attached to the message to be sent. In the server of the mobile communication system or in the mobile station, a second authentication unit is needed in which the message is identified by comparing the identification number with the mobile station-specific individualized list of identification numbers.

In one embodiment, the user of the mobile station pays a bill by means of his or her mobile station by sending a short message which is digitally signed and to which an identification number has been attached. The user writes the information needed in paying the bill in the short message and sends the short message to the server, in which the message is identified, as shown by the invention.

As compared to prior art, the invention provides the advantage that it enables one to promptly and easily identify among the digitally signed messages the doubled ones as well as those received too late. In that case, the invention may be used, e.g. in a mobile station which has got only a restricted amount of memory and processing power in use. The invention is also used for the preventing of repeated attacks.

### BRIEF DESCRIPTION OF THE DRAWINGS

In the following section, the invention will be described by the aid of a few examples of its embodiments with reference to the accompanying drawing, in which
Fig. 1 represents one system in accordance with the invention;
Fig. 2 is a flow chart illustrating the method in accordance with the invention;
Fig. 3 represents one embodiment in accordance with the invention;
Fig. 4 represents one list of identification numbers in accordance with the invention; and
Fig. 5 represents one embodiment in accordance with the invention.

### DETAILED DESCRIPTION OF THE INVENTION

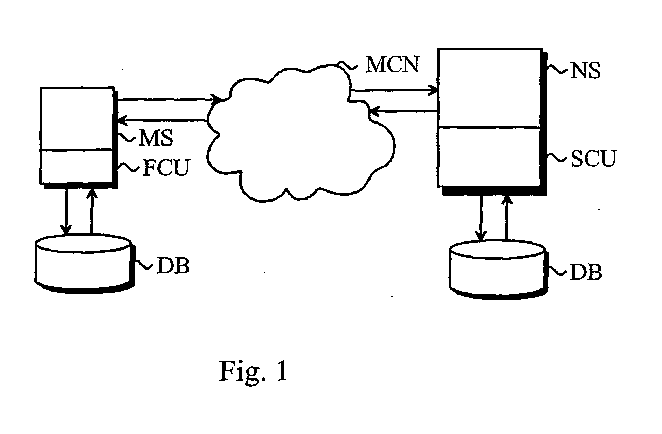

Fig. 1 represents one system in accordance with the invention. The mobile station MS consists of a first authentication unit FCU, which is usually disposed in the subscriber identity module (SIM, Subscriber Identity Module) of the mobile station. The mobile station MS is connected to the network server NS via the telecommunication network MCN. The network server NS comprises a second authentication unit SCU which is connected to the database DB. In the database DB there is a list of identification numbers of already received messages individualized for each mobile station. The second authentication unit processes the message sent by the mobile station and checks the reliability of the message by consulting the list of identification numbers. The message is incorrect, if it has arrived too late or if it is a duplicate.

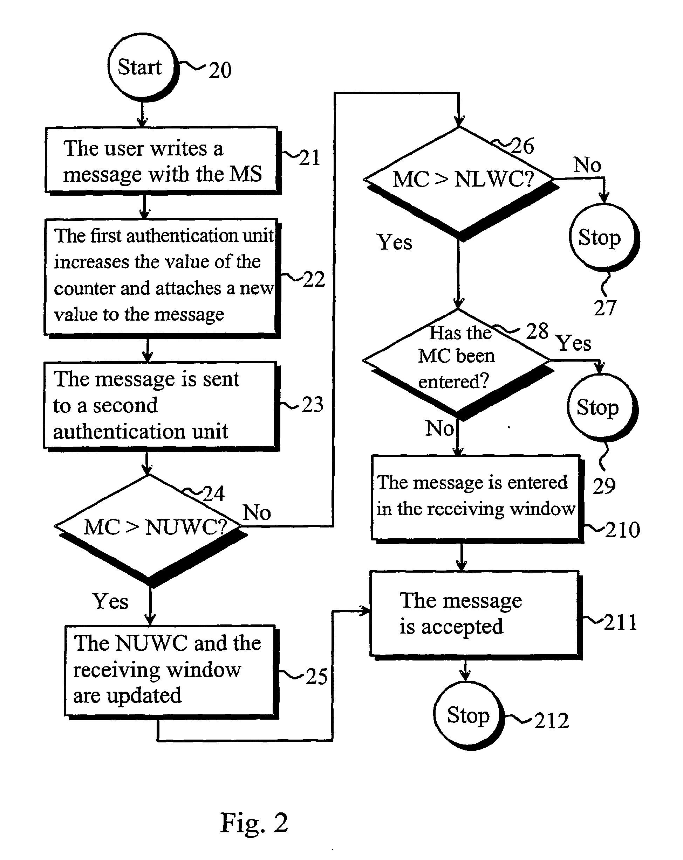

Fig. 2 represents one diagram of the method in accordance with the invention. At first the user writes a message in the mobile phone, block 21. Prior to sending the message, the first authentication unit FCU increases the identification number in the mobile station and attaches a new identification number to the message, block 22. The message is signed digitally and sent to the second authentication unit SCU, block 23. The identification number MC of the message is compared with the uppermost number NUWC of the list of identification numbers located in the network server, block 24. If the identification number of the message is bigger than the uppermost number of the list of identification numbers, then the list of identification numbers is updated. One implementation for the list of identification numbers is the use of bit registers in which a separate bit is used to mark whether the message has already been received. If the identification number MC of the message is below the undermost number NLWC in the list of identification numbers, then it is a question about a message arrived too late that is rejected, blocks 26 and 27. If the identification number of the message falls between the undermost and uppermost number in the list of identification numbers, then the list of identification numbers is consulted in order to find out whether the message has already been received, block 28. If the message has not been entered in the list of identification numbers, then it is entered in the list of identification numbers and the message is accepted, blocks 210 and 211.

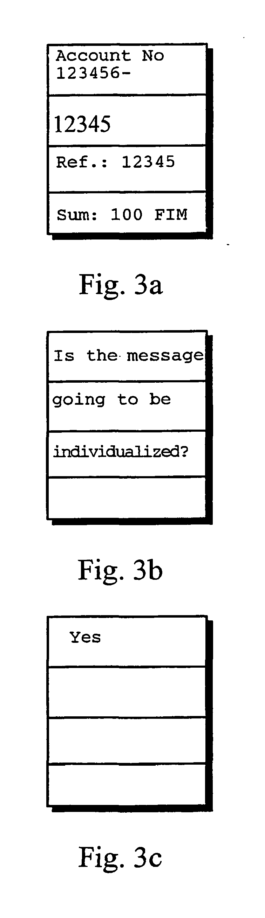

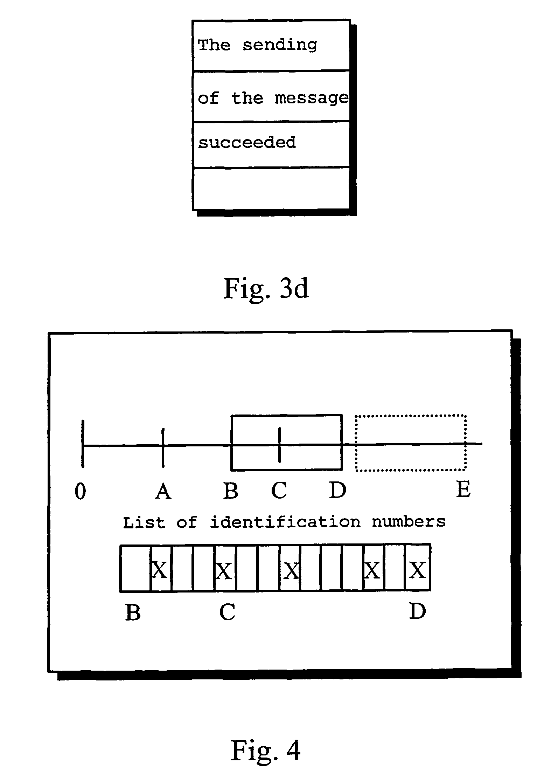

Fig. 3 represents one embodiment in accordance with the invention. The user writes in the mobile station the information needed in paying a bill, of which there is the illustration of a display of a mobile station in figure 3a. Prior to the digital signing of the message the user is asked whether the message is going to be individualized, figure 3b. The user accepts the individualizing, so an identifier individualizing the message is attached to the message, as shown by the invention, figure 3c. The message is signed digitally and sent to the network server via the data transmission network. The user is informed in case the message was successfully transmitted, figure 3d.

Fig. 4 represents one list of identification numbers in accordance with the invention. The segment of line in the figure shows identification numbers of messages. The identification number of message A has arrived too late as compared with the location of the list of identification numbers, so message A is rejected. The identification number of message B points to the undermost identification number in the list of identification numbers and therefore a first acceptable identification number of the message. The identification number of message C is within the area of the list of identification numbers, but the message is not accepted because the identification number of the message is already on the list of identification numbers, so the message has been received earlier. Points marked with X in the list of identification numbers refer to the identification numbers of messages already received. The identification number of message D points to the uppermost acceptable message in the list of identification numbers. The identification number of message E exceeds the list of identification numbers, so the list of identification numbers is moved so that the identification number of message E will be the uppermost identification number of the new list of identification numbers. In moving the list of identification numbers, those identification numbers of messages received that are too low are eliminated from the list of identification numbers.

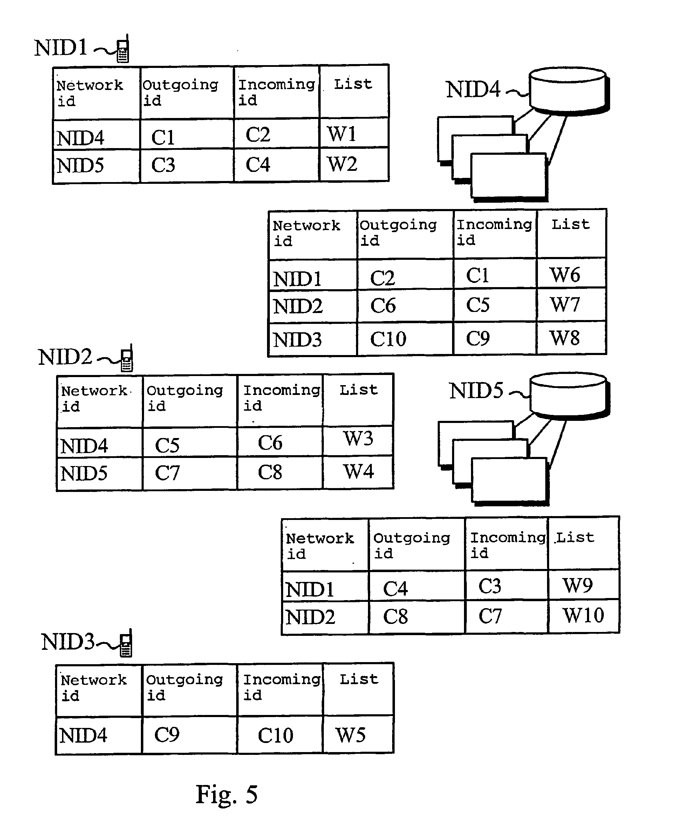

Fig. 5 represents one embodiment in accordance with the invention. The telecommunication system consists of mobile stations NID1, NID2, NID3 and databases NID4, NID5. Saved to the mobile station NID1 is a database which consists of a network identifier (Network ID), an identifier of an outgoing message, an identifier of an incoming message and the list of identification numbers of messages received. The network id is an unambiguous number which is used to identify the device in question in the telecommunication network. In the figure, the outgoing identifier is an identifier to be attached to the message and correspondingly the incoming identifier is the identification number of an incoming message. The identification number consists, e.g. of 16 bits. Also on the server of the telecommunication network there is a database resembling the database of a mobile station that is used to identify the messages sent to the server. It must be noted that the system is symmetric, so it is possible to identify both the messages sent from the mobile station to the server and the ones sent from the server to the mobile station, as shown by the invention.

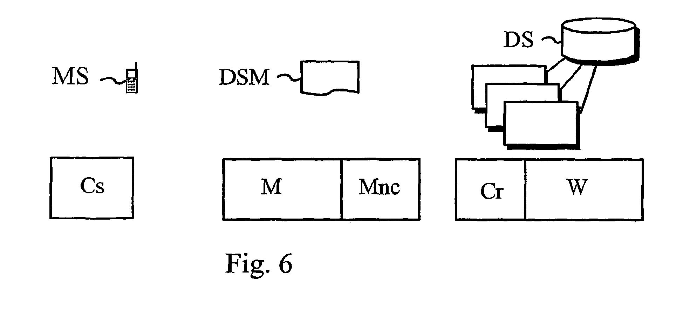

Fig. 6 represents one embodiment in accordance with the invention. For the identification of the message, each network element includes information. In the mobile station Ms there is an a-bit identification number Cs which contains the value of the identifier of the message last sent. The digitally signed message DSM itself consists of the content of the message M and of an identification number Mnc. In the server DS there is an a-bit identification number Cr which contains the biggest identification number received this far as well as a b-bit list of identification numbers W, on which there is stored the status of a previous identification number of B. The B-bit list of identification numbers W may be implemented as a bit field in such a way that bit 1 means that the message has been received. Correspondingly, bit 0 means that the message has not been received.

The invention is not restricted merely to the embodiments referred to above, instead many variations are possible within the scope of the inventive idea defined by the claims.

## Claims

1. A method for the identification of digitally signed messages in a telecommunication system comprising:
a telecommunication network (MCN);
a mobile station (MS) which is connected to the telecommunication network (MCN) and which comprises a subscriber identity module (SIM);
a network server (NS) which is connected to the telecommunication network (MCN); and
a database (DB) which is connected to the network server (NS) and which comprises a mobile station-specific list of identification numbers, in which method:
a connection is established between the mobile station (MS) and the network server (NS); and
the message is saved to the mobile station (MS),
**characterized in that** the method comprises the steps of:
increasing the identification number of the message in a first authentication unit (FCU);
attaching to the message an identification number from the first authentication unit (FCU);
sending the message to a second authentication unit (SCU);
checking in the identification number whether the message has been received earlier;
accepting the message, if the message has not been received yet and if the identification number of the message exceeds the undermost identification number of the list of identification numbers and goes below the uppermost identification number of the list of identification numbers; and
accepting the message and updating the list of identification numbers, if the identification number of the message exceeds the uppermost identification number of the list of identification numbers located in the network server (NS).

2. A method as defined in claim 1 **characterized in that** the first authentication unit (FCU) is placed into the mobile station (MS) or the subscriber identity module (SIM), if the second authentication unit SCU) is located in the network server (NS).

3. A method as defined in claim 1 **characterized in that** the first authentication unit (FCU) is placed into the network server (NS), if the second authentication unit (SCU) is located in the mobile station (MS).

4. A method as defined in claim 1, 2 or 3, **characterized in that** if the message identification number of the message exceeds the uppermost identification number of the list of identification numbers, the list of identification numbers is moved so that the identification number of the message becomes the uppermost identification number of the new list of identification numbers.

5. A method as defined in claim 1, 2, 3 or 4, **characterized in that** the list of received identification numbers is updated, if the message is accepted.

6. A method as defined in claim 1, 2, 3, 4 or 5, **characterized in that** the message is transmitted in a global system for mobile communications (GSM).

7. A method as defined in claim 1, 2, 3, 4, 5 or 6, **characterized in that** the message is transferred as a short message via the short message service (SMS).

8. A method as defined in claim 1, 2, 3, 4, 5 6 or 7, **characterized in that** the message is signed digitally for the time of the data transfer.

9. A method as defined in claim 1, 2, 3, 4, 5 6, 7 or 8, **characterized in that** the first authentication unit (FCU) is so programmed that it stops to operate, if the identification number grows too big.

10. A method as defined in claim 1, 2, 3, 4, 5, 6, 7, 8 or 9, **characterized in that** the first authentication unit (FCU) is placed into the subscriber identity module (SIM).

11. A system for the identification of digitally signed messages in a telecommunication system comprising:
a telecommunication network (MCN);
a mobile station (MS) which is connected to the telecommunication network (MCN) and which comprises a subscriber identity module (SIM);
a network server (NS) which is connected to the telecommunication network (MCN); and
a database (DB) which is connected to the network server (NS) and which comprises a mobile station-specific list of identification numbers of a mobile station, in which system:
a connection is established between the mobile station (MS) and the network server (NS), and
the message is saved to the mobile station (MS),
**characterized in that** the system comprises:
a first authentication unit (FCU) which comprises a generator for generating the identification number of the message and attaching it to the message; and
a second authentication (SCU) which comprises an authenticator for identifying digitally signed messages and for updating the list of identification numbers,
wherein the authenticator is arranged to:
check in the identification number whether a received message has been received earlier;
accept the message, if the message has not been received earlier and if the identification number of the message exceeds the undermost identification number of the list of identification numbers and goes below the uppermost identification number of the list of identification numbers; and
accept the message and update the list of identification numbers, if the identification number of the message exceeds the uppermost identification number of the list of identification numbers.

## Patentansprüche

1. Verfahren zur Identifikation digital signierter Nachrichten in einem Telekommunikationssystem umfassend:
ein Telekommunikationsnetzwerk (MCN);
eine Mobilstation (MS), welche mit dem Telekommunikationsnetzwerk (MCN) verbunden ist, und welche ein Abonnentenidentitätsmodul (SIM) umfasst;
einen Netzwerkserver (NS), welcher mit dem Telekommunikationsnetzwerk (MCN) verbunden ist; und
eine Datenbank (DB), welche mit dem Netzwerkserver (NS) verbunden ist, und welche eine für die Mobilstation spezifische Liste von Identifikationszahlen umfasst, in welchem Verfahren:
eine Verbindung zwischen der Mobilstation (MS) und dem Netzwerkserver (NS) hergestellt wird; und
die Nachricht in der Mobilstation (MS) gespeichert wird,
**dadurch gekennzeichnet, dass**
das Verfahren die folgenden Schritte umfasst:
Erhöhen der Identifikationszahl der Nachricht in einer ersten Authentifizierungseinheit (FCU);
Anhängen einer Identifikationszahl von der ersten Authentifizierungseinheit (FCU) an die Nachricht;
Senden der Nachricht an eine zweite Authentifizierungseinheit (SCU);
Prüfen in der Identifikationszahl, ob die Nachricht früher empfangen worden ist;
Annehmen der Nachricht, wenn die Nachricht noch nicht empfangen worden ist, und wenn die Identifikationszahl der Nachricht die unterste Identifikationszahl aus der Liste der Identifikationszahlen überschreitet und die oberste Identifikationszahl der Liste von Identifikationszahlen unterschreitet; und
Annehmen der Nachricht und Aktualisieren der Liste von Identifikationszahlen, wenn die Identifikationszahl der Nachricht die oberste Identifikationszahl der Liste von Identifikationszahlen überschreitet, die sich in dem Netzwerkserver (NS) befindet.

2. Verfahren nach Anspruch 1,
**dadurch gekennzeichnet, dass**
die erste Authentifizierungseinheit (FCU) in der Mobilstation (MS) oder dem Abonnentenidentitätsmodul (SIM) angeordnet ist, wenn sich die zweite Authentifizierungseinheit (SCU) in dem Netzwerkserver (NS) befindet.

3. Verfahren nach Anspruch 1,
**dadurch gekennzeichnet, dass**
die erste Authentifizierungseinheit (FCU) in dem Netzwerkserver (NS) angeordnet ist, wenn die zweite Authentifizierungseinheit (SCU) sich in der Mobilstation (MS) befindet.

4. Verfahren nach Anspruch 1, 2 oder 3,
**dadurch gekennzeichnet, dass**
wenn die Nachrichtenidentifikationszahl der Nachricht die oberste Identifikationszahl der Liste von Identifikationszahlen überschreitet, die Liste der Identifikationszahlen umgestellt wird, so dass die Identifikationszahl der Nachricht die oberste Identifikationszahl der neuen Liste von Identifikationszahlen wird.

5. Verfahren nach Anspruch 1, 2, 3 oder 4,
**dadurch gekennzeichnet, dass**
die Liste der empfangenen Identifikationszahlen aktualisiert wird, wenn die Nachricht akzeptiert wird.

6. Verfahren nach Anspruch 1, 2, 3, 4 oder 5,
**dadurch gekennzeichnet, dass**
die Nachricht in einem globalen System für mobile Kommunikation (GSM) gesendet wird.

7. Verfahren nach Anspruch 1, 2, 3, 4, 5 oder 6,
**dadurch gekennzeichnet, dass**
die Nachricht als Kurznachricht über den Kurznachrichtendienst (SMS) übertragen wird.

8. Verfahren nach Anspruch 1, 2, 3, 4, 5, 6 oder 7,
**dadurch gekennzeichnet, dass**
die Nachricht digital für die Zeit der Datenübertragung signiert wird.

9. Verfahren nach Anspruch 1, 2, 3, 4, 5, 6, 7 oder 8,
**dadurch gekennzeichnet, dass**
die erste Authentifizierungseinheit (FCU) so programmiert ist, dass sie den Betrieb einstellt, wenn die Identifikationszahl zu groß wird.

10. Verfahren nach Anspruch 1, 2, 3, 4, 5, 6, 7, 8 oder 9,
**dadurch gekennzeichnet, dass**
die erste Authentifizierungseinheit (FCU) in dem Abonnentenidentitätsmodul (SIM) angeordnet ist.

11. System zur Identifikation von digital signierten Nachrichten in einem Telekommunikationssystem umfassend:
ein Telekommunikationsnetzwerk (MCN);
eine Mobilstation (MS), welche mit dem Telekommunikationsnetzwerk (MCN) verbunden ist, und welche ein Abonnentenidentitätsmodul (SIM) umfasst;
einen Netzwerkserver (NS), welcher mit dem Telekommunikationsnetzwerk (MCN) verbunden ist; und
eine Datenbank (DB), welche mit dem Netzwerkserver (NS) verbunden ist, und welche eine für die Mobilstation spezifische Liste von Identifikationszahlen umfasst, in welchem System:
eine Verbindung zwischen der Mobilstation (MS) und dem Netzwerkserver (NS) hergestellt wird, und
die Nachricht in der Mobilstation (MS) gespeichert wird,
**dadurch gekennzeichnet, dass** das System umfasst:
eine erste Authentifizierungseinheit (FCU), welche einen Generator zum Erzeugen der Identifikationszahl der Nachricht und deren Anhängen an die Nachricht umfasst; und
eine zweite Authentifizierungseinheit (SCU), welche einen Authentifikator zur Identifikation digital signierter Nachrichten und zum Aktualisieren der Liste von Identifikationszahlen umfasst,
wobei der Authentifikator dazu eingerichtet ist:
in der Identifikationszahl zu prüfen, ob eine empfangene Nachricht vorher empfangen worden ist;
die Nachricht anzunehmen, wenn die Nachricht nicht vorher empfangen worden ist und wenn die Identifikationszahl der Nachricht die unterste Identifikationszahl aus der Liste von Identifikationszahlen überschreitet und die oberste Identifikationszahl aus der Liste von Identifikationszahlen unterschreitet; und
die Nachricht anzunehmen und die Liste von Identifikationszahlen zu aktualisieren, wenn die Identifikationszahl der Nachricht die oberste Identifikationszahl der Liste von Identifikationszahlen überschreitet.

## Revendications

1. Procédé pour l'identification de messages numériquement signés dans un système de télécommunication, comprenant :
un réseau de télécommunication (MCN) ;
une station mobile (MS) qui est connectée au réseau de télécommunication (MCN) et qui comprend un module d'identité d'abonné (SIM) ;
un serveur réseau (NS) qui est connecté au réseau de télécommunication (MCN) ; et
une base de données (DB) qui est connectée au serveur réseau (NS) et qui comprend une liste de numéros d'identification spécifique à la station mobile, dans lequel procédé :
une connexion est établie entre la station mobile (MS) et le serveur réseau (NS) ; et
le message est sauvegardé dans la station mobile (MS),
**caractérisé en ce que** le procédé comprend les étapes consistant à :
augmenter le numéro d'identification du message dans une première unité d'authentification (FCU) ;
joindre au message un numéro d'identification à partir de la première unité d'authentification (FCU) ;
envoyer le message à une deuxième unité d'authentification (SCU) ;
vérifier dans le numéro d'identification si le message a été reçu précédemment ;
accepter le message, si le message n'a pas encore été reçu et si le numéro d'identification dépasse le numéro d'identification le plus bas de la liste de numéros d'identification et passe sous le numéro d'identification le plus élevé de la liste de numéros d'identification ; et
accepter le message et mettre à jour la liste de numéros d'identification, si le numéro d'identification du message dépasse le numéro d'identification le plus élevé de la liste de numéros d'identification situés dans le serveur réseau (NS).

2. Procédé selon la revendication 1, **caractérisé en ce que** la première unité d'authentification (FCU) est placée dans la station mobile (MS) ou dans le module d'identité d'abonné (SIM), si la deuxième unité d'authentification (SCU) se trouve dans le serveur réseau (NS).

3. Procédé selon la revendication 1, **caractérisé en ce que** la première unité d'authentification (FCU) est placée dans le serveur réseau (NS), si la deuxième unité d'authentification (SCU) se trouve dans la station mobile (MS).

4. Procédé selon la revendication 1, 2 ou 3, **caractérisé en ce que**, si le numéro d'identification de message du message dépasse le numéro d'identification le plus élevé de la liste de numéros d'identification, la liste de numéros d'identification est déplacée de sorte que le numéro d'identification du message devienne le numéro d'identification le plus élevée de la liste de numéros d'identification.

5. Procédé selon la revendication 1, 2, 3 ou 4, **caractérisé en ce que** la liste de numéros d'identification reçue est mise à jour, si le message est accepté.

6. Procédé selon la revendication 1, 2, 3, 4 ou 5, **caractérisé en ce que** le message est transmis dans un système mondial pour télécommunications mobiles (GSM).

7. Procédé selon la revendication 1, 2, 3, 4, 5 ou 6, **caractérisé en ce que** le message est transféré sous forme d'un message court via le service de messages courts (SMS).

8. Procédé selon la revendication 1, 2, 3, 4, 5, 6 ou 7, **caractérisé en ce que** le message est signé numériquement pour le temps du transfert de données.

9. Procédé selon la revendication 1, 2, 3, 4, 5, 6, 7 ou 8, **caractérisé en ce que** la première unité d'authentification (FCU) est programmée de sorte qu'elle s'arrête de fonctionner, si le numéro d'identification devient trop important.

10. Procédé selon la revendication 1, 2, 3, 4, 5, 6, 7, 8 ou 9, **caractérisé en ce que** la première unité d'authentification (FCU) est placée dans le module d'identité d'abonné (SIM).

11. Système pour l'identification de messages numériquement signés dans un système de télécommunication, comprenant :
un réseau de télécommunication (MCN) ;
une station mobile (MS) qui est connectée au réseau de télécommunication (MCN) et qui comprend un module d'identité d'abonné (SIM) ;
un serveur réseau (NS) qui est connecté au réseau de télécommunication (MCN) ; et
une base de données (DB) qui est connectée au serveur réseau (NS) et qui comprend une liste de numéros d'identification d'une station mobile spécifique à la station mobile, dans lequel système :
une connexion est établie entre la station mobile (MS) et le serveur réseau (NS), et
le message est sauvegardé dans la station mobile (MS),
**caractérisé en ce que** le système comprend :
une première unité d'authentification (FCU) qui comprend un générateur destiné à générer le numéro d'identification du message et à le joindre au message ; et
une deuxième unité d'authentification (SCU) qui comprend un dispositif d'authentification destiné à identifier des messages numériquement signés et à mettre à jour la liste de numéros d'identification,
dans lequel le dispositif d'authentification est conçu pour :
vérifier dans le numéro d'identification si un message reçu a été reçu précédemment ;
accepter le message, si le message n'a pas été reçu précédemment et si le numéro d'identification dépasse le numéro d'identification le plus bas de la liste de numéros d'identification et passe sous le numéro d'identification le plus élevé de la liste de numéros d' identification ; et
accepter le message et mettre à jour la liste de numéros d'identification, si le numéro d'identification du message dépasse le numéro d'identification le plus élevé de la liste de numéros d'identification.
